(19) **Europäisches Patentamt / European Patent Office / Office européen des brevets**

(11) **EP 2 152 565 B1**

(12) **EUROPÄISCHE PATENTSCHRIFT**

(45) Veröffentlichungstag und Bekanntmachung des Hinweises auf die Patenterteilung:
**15.06.2011 Patentblatt 2011/24**

(51) Int Cl.:
*B62D 15/02* (2006.01)    *B60W 50/08* (2006.01)
*B62D 5/04* (2006.01)

(21) Anmeldenummer: **08717993.3**

(22) Anmeldetag: **19.03.2008**

(86) Internationale Anmeldenummer:
**PCT/EP2008/053264**

(87) Internationale Veröffentlichungsnummer:
**WO 2008/131991 (06.11.2008 Gazette 2008/45)**

(54) **Verfahren und Vorrichtung für die Steuerung eines Fahrerassistenzsystems**

Method and device for the control of a driver assistance system

Procédé et dispositif pour la commande d'un système d'aide à la conduite

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.04.2007 DE 102007020280**

(43) Veröffentlichungstag der Anmeldung:
**17.02.2010 Patentblatt 2010/07**

(73) Patentinhaber: **Robert Bosch GmbH**
**70442 Stuttgart (DE)**

(72) Erfinder:
• **BUERKLE, Lutz**
**71229 Leonberg (DE)**
• **RENTSCHLER, Tobias**
**75180 Pforzheim (DE)**
• **APP, Thomas**
**75059 Zaisenhausen (DE)**

(56) Entgegenhaltungen:
WO-A-2007/042462      DE-A1- 10 311 518
DE-A1- 19 948 913      DE-A1-102004 048 047
DE-A1-102005 033 866

**Beschreibung**

Stand der Technik

Die Erfindung betrifft ein Verfahren für die Steuerung eines Fahrerassistenzsystems nach dem Oberbegriff des Anspruchs 1 und eine Vorrichtung nach dem Oberbegriff des Anspruchs 14. Es sind Fahrerassistenzsysteme bekannt, die den Fahrer bei dem Einhalten einer gewählten Fahrspur unterstützen. Das Fahrerassistenzsystem umfasst dazu Assistenzfunktionen wie LDW (Lane Departure Warning) und/oder LKS (Lane Keeping Support). Die Assistenzfunktion LDW warnt den Fahrer vor einem Verlassen der Fahrspur durch Erzeugung von optischen und/oder akustischen und/oder haptischen Signalen. Die Assistenzfunktion LKS greift aktiv in Bordsysteme des Fahrzeugs, wie beispielsweise das Lenksystem, und/oder das Bremssystem oder ein ESP-System ein, um ein von der Fahrspur abweichendes Fahrzeug in der Fahrspur zu halten. Das Fahrerassistenzsystem umfasst dazu ein insbesondere mindestens einen Videosensor umfassendes Sensorsystem für die Erfassung von Fahrspurmarkierungen oder dergleichen.

Derartige Fahrerassistenzsysteme sind beispielsweise aus der DE 103 11 518 A1 bekannt.

Aus DE 101 37 292 A1 ist ein Verfahren zum Betreiben eines Fahrer-Assistenzsystems eines Fahrzeugs, insbesondere Kraftfahrzeugs, mit einer servounterstützten Lenkung bekannt. Dieses Verfahren ist durch folgende Schritte gekennzeichnet:

- Erfassen oder Abschätzen von Umgebungsdaten einer, vorzugsweise momentanen, Verkehrssituation,

- Erfassen oder Abschätzen von, vorzugsweise momentanen, Bewegungsdaten des Fahrzeugs,

- Vergleichen der erfassten oder abgeschätzten Umgebungsdaten mit den Bewegungsdaten des Fahrzeugs,

- Änderung der Unterstützung einer Lenkhandhabe nach Maßgabe des Vergleichs.

Bei Erreichen einer vorgegebenen Systemgrenze, beispielsweise durch Verlust der Fahrspur bzw. deren Markierung, Überschreiten eines Maximalwerts der Querbeschleunigung, oder Ähnliches, deaktivieren sich diese Assistenzsysteme, indem das von dem Assistenzsystem an dem Lenkrad aufgebrachte Führungsmoment reduziert wird. Der Fahrer muss dann die Querführung des Fahrzeugs wieder vollständig selbst übernehmen. Wenn dies bei schwierigen Fahrsituationen, wie beispielsweise Kurvenfahrt, abrupt erfolgt, kann dies von dem Fahrer nicht nur als störend empfunden werden sondern auch eine gefährliche Situation heraufbeschwören.

Unter LKS-Funktion wird im Folgenden eine Funktion zur Querführung des Fahrzeugs verstanden, mit deren Hilfe das Fahrzeug auf der eigenen Fahrspur gehalten werden kann.

Die gattungsbildende DE 19948913 A1 offenbart ein System zur Lenksteuerung eines Fahrzeugs, mit einem Elektromotor zur Servolenk-Hilfsdrehmoment-Steuerung. Das System besitzt ein Navigationssystem, dessen Ausgabe zur Korrektur des vom Fahrzeugfahrer eingegebenen erfassten Lenkwinkels verwendet wird. Eine gewünschte Gierrate wird auf der Basis des korrigierten Lenkwinkels und der erfassten Fahrgeschwindigkeit unter Verwendung eines Gierratenmodells bestimmt, wodurch die Fahrbahnhalte-Lenkhilfsdrehmoment-Steuerung in besser geeigneter Weise durchgeführt werden kann. Wenn ferner der Fahrzeugfahrer einen positiven Wunsch ausdrückt, das Fahrzeug selbst zu lenken, beispielsweise um ein auf der Fahrbahn befindliches Hindernis zu vermeiden, wird die Steuerung unterbrochen, um den Wünschen des Fahrzeugfahrers nachzukommen. Ferner überwacht das System die Lenkung durch den Fahrzeugfahrer, um zu verhindern, dass sich der Fahrzeugfahrer in zu starkem Ausmaß auf die Lenkhilfssteuerung verlässt.

Offenbarung der Erfindung

Technische Aufgabe

Der Erfindung liegt die Aufgabe zugrunde, ein Fahrerassistenzsystem der gattungsgemäßen Art dahingehend zu verbessern, dass die Systemakzeptanz bei dem Fahrer erhöht und dadurch der Fahrkomfort verbessert wird.

Technische Lösung

Diese Aufgabe wird, ausgehend von einem Verfahren oder einer Vorrichtung für die Steuerung eines Fahrerassistenzsystems nach dem Oberbegriff des Anspruchs 1 oder 14, dadurch gelöst, dass bei Deaktivierung einer LKS-Funktion das von der LKS-Funktion auf die Lenkung des Fahrzeugs ausgeübte Führungsmoment entlang einer ersten Wegstrecke auf einen vorgebbaren Wert gesteuert wird, dass dieser Wert entlang einer zweiten Wegstrecke im Wesentlichen konstant gehalten und entlang einer dritten Wegstrecke auf Null zurückgeführt wird.

Vorteilhafte Wirkungen

Die Erfindung ermöglicht eine weitere Verbesserung des Fahrkomforts bei einem mit einem Fahrerassistenzsystem ausgestatteten Fahrzeug und dadurch eine gesteigerte Akzeptanz für ein solches System bei dem Fahrer. Dadurch, dass bei Erreichen einer Systemgrenze, zum Beispiel durch Spurverlust, und einer daraus resultierenden Deaktivierung der LKS-Funktion des Fahrerassistenzsystems das an dem Lenkrad erzeugte Führungsmoment bei einer Kurvenfahrt nicht vollständig zurückgeführt, das aktuelle Lenkradmoment vielmehr auf einen Teilwert zurückgeführt wird, bleibt dem Fahrer bei einer Deaktivierung der LKS-Funktion hinreichend Zeit, um sich auf die selbständige Führung des Fahrzeugs vorzubereiten. Durch die langsame Anpassung werden gefährliche Situationen vermieden.

Besonders vorteilhaft werden für die Aktivierung bzw. Deaktivierung der LKS-Funktion Grenzwerte vorgegeben, derart, dass die LKS-Funktion innerhalb der Grenzwerte aktiviert und außerhalb dieser Grenzwerte deaktiviert wird, wobei die genannten Grenzwerte während der Fahrt des Fahrzeugs kontinuierlich überwacht werden, der Verlauf der Fahrspur überwacht wird, und, bei Erfassung einer Kurvenfahrt und bevorstehender Deaktivierung der LKS-Funktion infolge Überschreitens eines vorgebbaren Grenzwerts, die LKS-Funktion von einer Regelung auf eine Steuerung umgeschaltet wird.

Erfindungsgemäß wird bei Deaktivierung der LKS-Funktion das von der LKS-Funktion auf die Lenkung des Fahrzeugs ausgeübte Führungsmoment entlang einer ersten Wegstrecke auf einen vorgebbaren Wert gesteuert, wobei dieser Wert entlang einer zweiten Wegstrecke im Wesentlichen konstant gehalten wird und das von der LKS-Funktion auf die Lenkung des Fahrzeugs ausgeübte gesteuerte Führungsmoment entlang einer dritten Wegstrecke auf Null zurückgeführt wird.

Vorteilhaft wird ein Schwellwert für die Krümmung der Solltrajektorie vorgegeben. Während der Fahrt des Fahrzeugs wird die Krümmung der Solltrajektorie erfasst. Eine Kurvenfahrt wird dann unterstellt, wenn die während der Fahrt erfasste Krümmung der Solltrajektorie den vorgegebenen Schwellwert betragsmäßig überschreitet.

In einem besonders vorteilhaften Ausführungsbeispiel erfolgt die Rückführung des Führungsmoments auf einen gesteuerten Wert bzw. auf den Wert Null nach einer linearen Funktion. Weitere Vorteile ergeben sich aus den Unteransprüchen, der Beschreibung und der Zeichnung.

Kurze Beschreibung der Zeichnungen

Ausführungsformen der Erfindung werden nachfolgend unter Bezug auf die Zeichnung näher erläutert. Dabei zeigt:

Figur 1    ein Blockdiagramm eines Fahrerassistenzsystems mit LKS-Funktion;

Figur 2    eine schematische Darstellung einer ersten Verkehrssituation;

Figur 3    eine schematische Darstellung einer zweiten Verkehrssituation;

Figur 4    eine schematische Darstellung einer dritten Verkehrssituation;

Figur 5    eine schematische Darstellung einer vierten Verkehrssituation;

Figur 6    eine schematische Darstellung einer fünften Verkehrssituation;

Figur 7    eine schematische Darstellung einer sechsten Verkehrssituation;

Figur 8    die Darstellung des Eingriffsmoments bei einem ersten Ausführungsbeispiel;

Figur 9    die Darstellung des Eingriffsmoments bei einem zweiten Ausführungsbeispiel;

Figur 10    eine schematische Darstellung eines Fahrzeugs.

Ausführungsformen der Erfindung

Ausführungsformen der Erfindung werden im Folgenden unter Bezug auf die Zeichnung näher erläutert. Dabei werden folgende Begriffe benutzt. Als Führungsmoment wird ein geregeltes, von der LKS-Funktion (LKS = Lane Keeping Support) aufgebrachtes Moment bezeichnet. Als Rückstellmoment wird ein gesteuertes Moment bezeichnet, das für eine Kurvenfahrt an dem Lenkrad des Fahrzeugs aufgebracht werden muss. Als Lenkradmoment wird das an dem Lenkrad des Fahrzeugs von dem System aufgebrachte Moment bezeichnet. Hierbei kann es sich um die zuvor definierten Momente Führungsmoment oder Rückstellmoment handeln. Als Fahrermoment wird das von dem Fahrer des Fahrzeugs an dem Lenkrad aufgebrachte Moment bezeichnet.

Bei einer Deaktivierung der LKS-Funktion des Fahrerassistenzsystems, in Abhängigkeit von der jeweiligen Situation, wird von einer LKS-Regelung auf eine LKS-Steuerung übergegangen. Auf diese Weise wird vorteilhaft erreicht, dass dem Fahrer, beispielsweise bei einer Kurvenfahrt, das LKS Führungsmoment nicht vollständig entzogen wird, sondern, dass ein Systemmoment erzeugt wird, das ihm zumindest noch eine Teilunterstützung bietet. Dadurch wird vermieden, dass die Unterstützung in der Querfuhrung durch das Fahrerassistenzsystem während einer Kurvenfahrt abrupt wegfällt und es dadurch zu gefährlichen Situationen kommen kann.

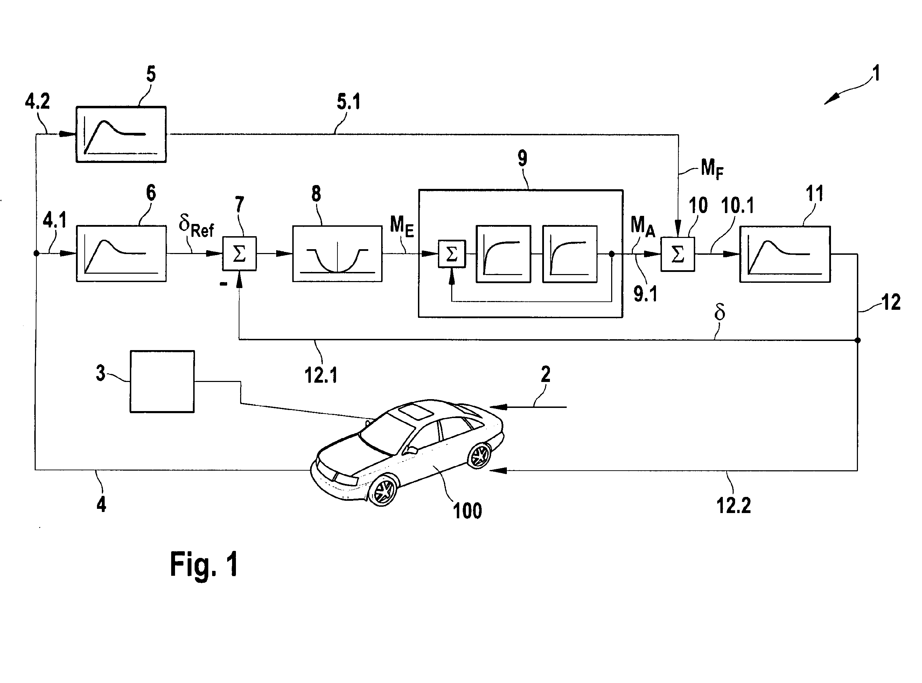

Figur 1 zeigt ein Blockdiagramm eines Fahrerassistenzsystems 1 mit LKS Funktion, das in einem Fahrzeug 100 angeordnet ist. Über entsprechende Sensoren, wie insbesondere mindestens einen Videosensor 3, werden die Ablage des Fahrzeugs, der Differenzwinkel, die Krümmung der Fahrspur erfasst und über die Pfade 4, 4.1 einem Funktionsmodul 6 des Fahrerassistenzsystems 1 zugeleitet. Das Funktionsmodul 6 umfasst ein Referenzmodell für die Querführung des Fahrzeugs 100, das aus den genannten Eingangsgrößen ei-

nen Referenzwinkel $\delta_{Ref}$ bildet. Dieser Referenzwinkel wird einem ersten Eingang eines Funktionsmoduls 7 (Summationsknoten) zugeführt, dessen Ausgang mit einem Funktionsmodul 8 verbunden ist. Das Funktionsmodul 8 umfasst eine Führungskennlinie für die LKS-Funktion des Fahrerassistenzsystems 1. Das Funktionsmodul 8 ist mit einem Funktionsmodul 9 verbunden. Bei diesem Funktionsmodul 9 handelt es sich um einen Lenksteller mit Momentenregelkreis. Das Funktionsmodul 9 ist mit einem ersten Eingang eines weiteren Funktionsmoduls 10 (Summationsknoten) verbunden (Pfad 9.1). Gleichzeitig erfasst der Fahrer (Funktionsmodul 5) die Fahrsituation (Pfad 4.2) und steuert das Fahrzeug 100 mit dem Lenkrad (Pfad 5.1). Der Fahrerwunsch und die Systemreaktion wirken gemeinsam (Funktionsmodul 10) auf das Lenksystem 11 (Pfad 10.1) des Fahrzeugs 100 und steuern (Pfade 12, 12.2) dessen Querbewegung. Über den schematisch angedeuteten Pfad 2 wirken Störungen auf das Fahrzeug 100 ein. Über die Pfade 12, 12.1 erfolgt eine Rückwirkung auf das Funktionsmodul 7.

Das von der LKS-Funktion des Fahrerassistenzsystems 1 erzeugte und dem Lenksystem 11 des Fahrzeugs 100 zugeführte Moment $M_A$ wird im Falle der Deaktivierung der LKS-Funktion nicht auf Null reduziert wird. Vielmehr wird ein von der jeweiligen Situation abhängiger Übergang von einem regelnden Eingriff auf einen steuernden Eingriff erzeugt. Eine Deaktivierung der LKS-Funktion findet beispielsweise dann statt, wenn ein Spurverlust auftritt, oder wenn vorgegebene Systemgrenzen, wie beispielsweise eine minimale oder eine maximale Geschwindigkeitsschwelle, überschritten werden. Um das Fahrzeug 100 beispielsweise durch eine Kurve zu führen, muss die LKS-Funktion des Fahrerassistenzsystems 1 ein Lenkradmoment an dem Lenkrad des Fahrzeugs 100 aufbringen, um die Räder des Fahrzeugs in einer Position zu halten, die für das Durchfahren der Kurve erforderlich ist. Dieses erforderliche Lenkradmoment, das aus der Vorderachsgeometrie des Fahrzeugs resultiert, bezeichnet man als Rückstellmoment der Lenkung. Dieses Rückstellmoment wird modellbasiert (Funktionsmodul 8) auf Basis der Krümmung der Solltrajektorie (Pfad 4.1) des Fahrzeugs 100 berechnet. Treten keine Störeinflüsse auf und würde man den Kurvenverlauf exakt kennen, so würde es ausreichen, dieses Rückstellmoment an dem Lenkrad des Fahrzeugs vorzusteuern, damit das Fahrzeug dem Kurvenverlauf folgt. Da aber bei der Fahrt Störungen auf das Fahrzeug 100 einwirken, die beispielsweise durch die Neigung der Fahrbahn bedingt sind, muss mittels der LKS-Funktion ein regelnder Eingriff erfolgen. Dieser Eingriff hat das Ziel, das Fahrzeug 100 auf einer Solltrajektorie 21, zum Beispiel auf der Mitte der Fahrbahn 20, zu führen, oder den Fahrer in der Führung des Fahrzeugs 100 durch ein gerichtetes Führungsmoment am Lenkrad zu unterstützen. Hierzu wird ein Lenkeingriff mit der LKS-Funktion derart erzeugt, dass dem Fahrer zum Beispiel laterale Abweichungen des Fahrzeugs relativ zu der Solltrajektorie angezeigt werden. Das Fahrerassistenzsystem 1 führt hierzu mit der LKS-Funktion einen geregelten Eingriff durch. Wenn die LKS-Funktion aktiviert ist und solche regelnde Eingriffe durchführt, wird die LKS-Funktion deaktiviert, wenn eine in dem System vorgesehene Grenze erreicht wird. Indem die aktuell gefahrene Spurkrümmung mit einem Schwellwert verglichen wird, wird zunächst überprüft, ob das Fahrzeug gerade eine Kurve durchfährt. Ist das nicht der Fall, wird die LKS-Funktion des Fahrerassistenzsystems in herkömmlicher Weise deaktiviert, indem das an dem Lenkrad des Fahrzeugs aufgebrachte Führungsmoment langsam auf Null reduziert wird. Durchfährt das Fahrzeug dagegen gerade eine Kurve, wird die Steuerung der LKS-Funktion erfindungsgemäß durchgeführt. Hierzu vergleicht das Fahrerassistenzsystem das an dem Lenkrad von dem System aufgebrachte Führungsmoment mit dem für die reine Kurvenfahrt ausreichenden Rückstellmoment, mit dem für die sichere Kurvenfahrt ausreichenden Rückstellmoment, mit dem von dem Fahrer aufgebrachten Lenkradmoment und dem detektierten Straßenverlauf. Gemäß einer vorteilhaften Weiterbildung kann mit Unterstützung weiterer Sensoren, insbesondere von Radarsensoren, auch noch die Situationsklassifikation gestützt werden. So kann beispielsweise aus der Kollektivbewegung der von den Sensoren erfassten Objekte, wie anderer Verkehrsteilnehmer, das Vorhandensein einer Kurve erfasst werden. Aus diesen Größen werden folgende Situationen nach den hier beschriebenen Vorschriften klassifiziert.

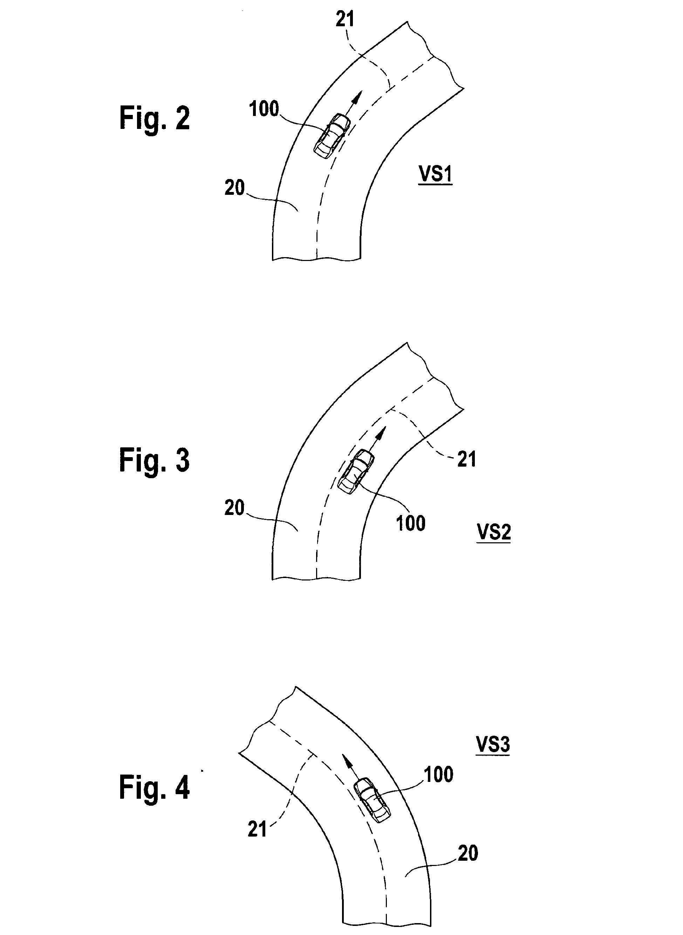

Dies wird im Folgenden unter Bezug auf Figur 2 bis Figur 7 anhand einiger Beispiele weiter erläutert.

Bei einer ersten Verkehrssituation VS1 (Figur 2) befährt das Fahrzeug 100 eine Kurve. Das mit der LKS-Funktion des Fahrerassistenzsystems aufgebrachte Führungsmoment ist negativ und kleiner als das negative Rückstellmoment. Hieraus kann geschlossen werden, dass das Fahrzeug 100 durch eine Rechtskurve fährt. Das Fahrzeug 100 befindet sich dabei links von der Solltrajektorie 21.

Bei einer zweiten Verkehrssituation VS2 (Figur 3) befährt das Fahrzeug 100 wiederum eine Kurve. Das von der LKS-Funktion aufgebrachte Führungsmoment ist negativ und größer als das negative Rückstellmoment. Hieraus kann geschlossen werden, dass das Fahrzeug 100 durch eine Rechtskurve fährt und dass sich das Fahrzeug 100 rechts von der Solltrajektorie 21 befindet.

Bei einer dritten Verkehrssituation VS3 (Figur 4) befährt das Fahrzeug 100 wiederum eine Kurve. Das Führungsmoment der LKS-Funktion ist positiv und größer als das positive Rückstellmoment. Hieraus kann geschlossen werden, dass das Fahrzeug 100 eine Linkskurve befährt. Das Fahrzeug 100 befindet sich dabei rechts von der Solltrajektorie 21.

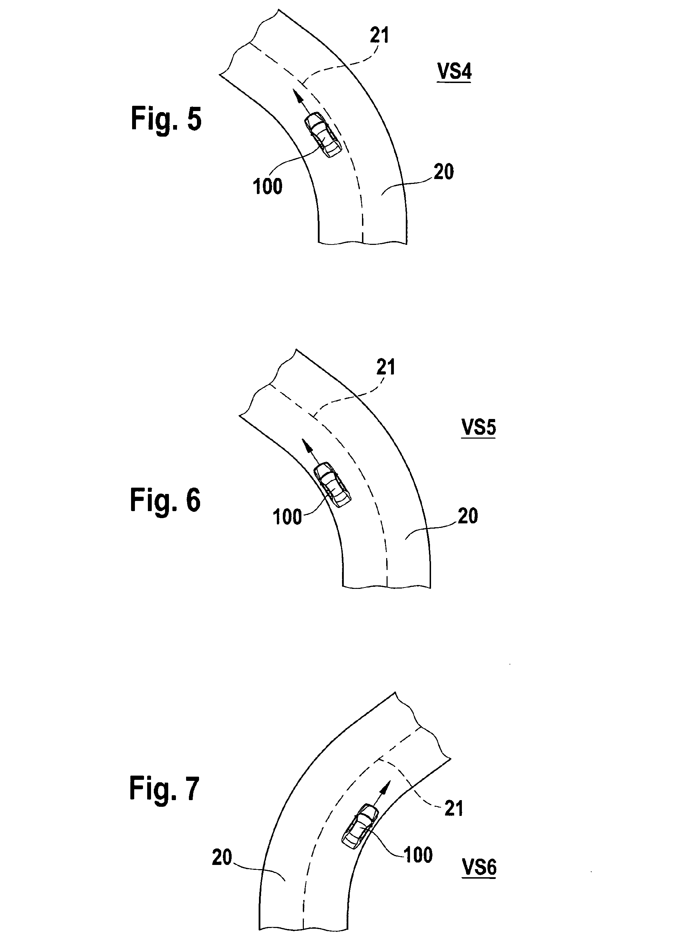

Bei einer vierten Verkehrssituation VS4 (Figur 5) befährt das Fahrzeug 100 wiederum eine Kurve. Das Führungsmoment der LKS-Funktion ist positiv und kleiner als das positive Rückstellmoment. Hieraus kann geschlossen werden, dass das Fahrzeug 100 eine Linkskurve befährt. Das Fahrzeug 100 befindet sich dabei links von der Solltrajektorie 21.

Bei einer fünften Verkehrssituation VS5 (Figur 6) befährt das Fahrzeug 100 wiederum eine Kurve. Das Führungsmoment der LKS-Funktion ist negativ und das Rückstellmoment ist positiv. Hieraus kann geschlossen werden, dass das Fahrzeug 100 eine Linkskurve befährt. Das Fahrzeug 100 befindet sich dabei weit links von der Solltrajektorie 21.

Bei einer sechsten Verkehrssituation VS6 (Figur 7) befährt das Fahrzeug 100 wiederum eine Kurve. Das Führungsmoment der LKS-Funktion ist positiv und das Rückstellmoment ist negativ. Hieraus kann geschlossen werden, dass das Fahrzeug 100 eine Rechtskurve befährt. Das Fahrzeug 100 befindet sich dabei weit rechts von der Solltrajektorie 21.

Eine sofortige Deaktivierung der LKS-Funktion mit einer graduellen Reduzierung des Führungsmoments bzw. Rückstellmoments auf den Wert Null wird dabei durchgeführt, wenn der Fahrer bei den zuvor beispielhaft beschriebenen sechs Verkehrssituationen das Fahrzeug 100 nach Kurvenaußen lenkt. Das ist dann der Fall, wenn die beiden folgenden Bedingungen erfüllt sind:

(1)

$$\kappa_{Traj} \langle -\kappa_{Curve}$$

und

$$M_{Driver} \langle -M_{Interv}$$

Sowie

$$\kappa_{Traj} \rangle \kappa_{Curve}$$

(2) *und* und

$$M_{Driver} \rangle M_{Interv}$$

Darin bedeuten:

$\kappa_{Traj}$ = die Krümmung der Solltrajektorie;

$\kappa_{Curve}$ = der Krümmungsschwellwert, ab dem eine Kurvenfahrt erkannt wird;

$M_{Driver}$ = das von dem Fahrer an dem Lenkrad erzeugte Moment;

$M_{Interv}$ = das Lenkradmoment, das einen Fahrereingriff von z.B. dem Sensorrauschen differenziert.

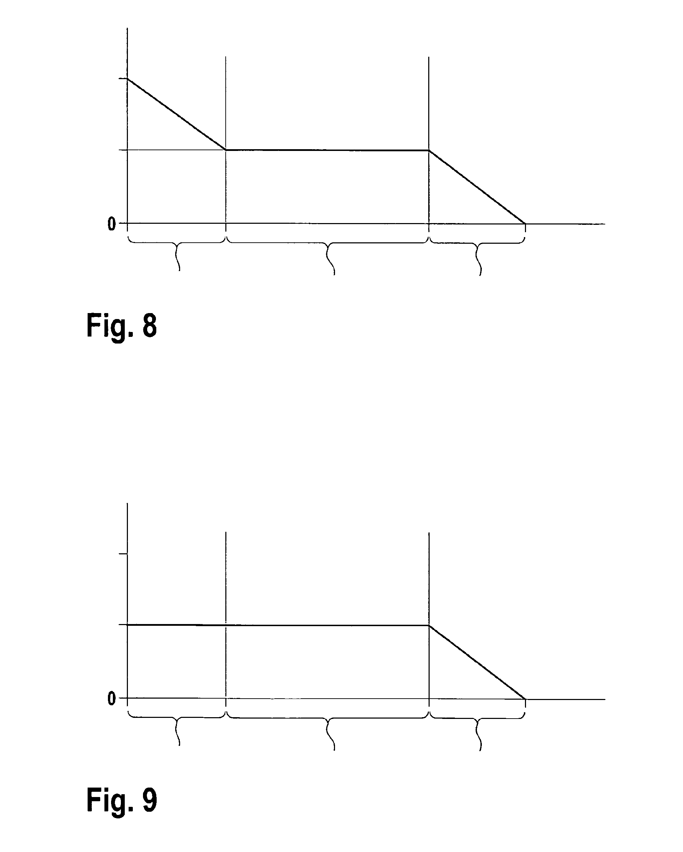

Ein wesentlicher Verfahrensschritt des erfindungsgemäßen Verfahrens ist, dass in den oben erwähnten Verkehrssituationen 1, 3, 5 und 6 das aktuell von der LKS-Funktion aufgebrachte Führungsmoment $M_{Führung}$ während der Phase 1 (Figur 8) über eine Wegstrecke $S_{red}$ auf den Wert des Rückstellmoments $M_{Rückstell}$ verändert wird. Hierbei wird der Übergang von dem geregelten Führungsmoment der LKS-Funktion zu einem gesteuerten Rückstellmoment vollzogen. Während der anschließend von dem Fahrzeug zurückgelegten Strecke $S_{Hold}$ wird in Phase 2 das gesteuerte Rückstellmoment konstant gehalten. Schließlich wird in Phase 3 entlang der Wegstrecke $S_{Zero}$ das gesteuerte Rückstellmoment auf den Wert Null abgesenkt und demzufolge die LKS-Funktion des Fahrerassistenzsystems 1 deaktiviert.

In dem in Figur 8 dargestellten Ausführungsbeispiel erfolgt die beschriebene Absenkung nach einer linearen Funktion. In anderen, alternativen Ausführungsvarianten kann die Absenkung auch nach einer anderen funktionalen Abhängigkeit erfolgen. Beispielsweise kann die Absenkung nach einer kubischen Funktion oder nach einer Funktion höherer Ordnung erfolgen. Wird während der Fahrt auf der Wegstrecke $S_{Hold}$ noch eine Fahrspur mit einer gültig gemessenen Krümmung der Kurve detektiert, dann kann das gesteuerte Rückstellmoment auf Basis dieser Messwerte berechnet und an dem Lenkrad des Fahrzeugs 100 aufgebracht werden. Sofern keine Fahrspur erkannt wird, kann stattdessen das gesteuerte Rückstellmoment aus der zuletzt gemessenen Krümmung der Solltrajektorie benutzt werden.

Bei den zuvor beispielhaft beschriebenen Verkehrssituationen zwei und vier liegt das aktuelle Führungsmoment niedriger als das für die Kurvenfahrt erforderliche Rückstellmoment. Da der Fahrer bei diesen Verkehrssituationen das Führungsmoment der LKS-Funktion bewusst reduziert hat, wird das aktuelle Führungsmoment bei dem Übergang von einem geregelten zu einem gesteuerten Systemeingriff beibehalten, wie die Darstellung in Figur 9 zeigt (Phase 1 und Phase 2 entlang der Wegstrecken $S_{Red}$ und $S_{Hold}$). In Phase 3, entlang der Wegstrecke $S_{zero}$, wird das beibehaltene Führungsmoment dann wie bei den zuvor erwähnten Verkehrssituationen auf Null abgesenkt. Die Festlegung der Längen der Wegstrecken $S_{Red}$, $S_{Hold}$ und $S_{Zero}$ erfolgt zweckmäßig auf Basis einer Videovorausschau, also auf Basis der von einem Videosensor gelieferten Signale. Sofern mittels der Videovorausschau die gesamte Kurve in ihrem Verlauf erkennbar ist oder die Spurdetektion während der Kurvenfahrt aufrecht gehalten werden kann, können die genannten Wegstrecken vorteilhaft auch derart justiert werden, dass sich die Wegstrecken $S_{Hold}$ über die gesamte Länge der Kurve erstreckt. Weiterhin ist, in einer alternativen Variante, auch denkbar, dass eine Adaption der Wegstrecken auch durch einen Lenkeingriff des Fahrers möglich ist. Hierbei kann, abgeleitet aus den Lenkeingriffen des Fahrers, ein Fahreraktivitätsmaß definiert werden. In Abhängigkeit von diesem Fahreraktivitätsmaß kann dann die Länge der Strecke S verkürzt werden, da von einer Übernahme der Führungsaufgabe durch den Fahrer selbst ausgegangen werden kann.

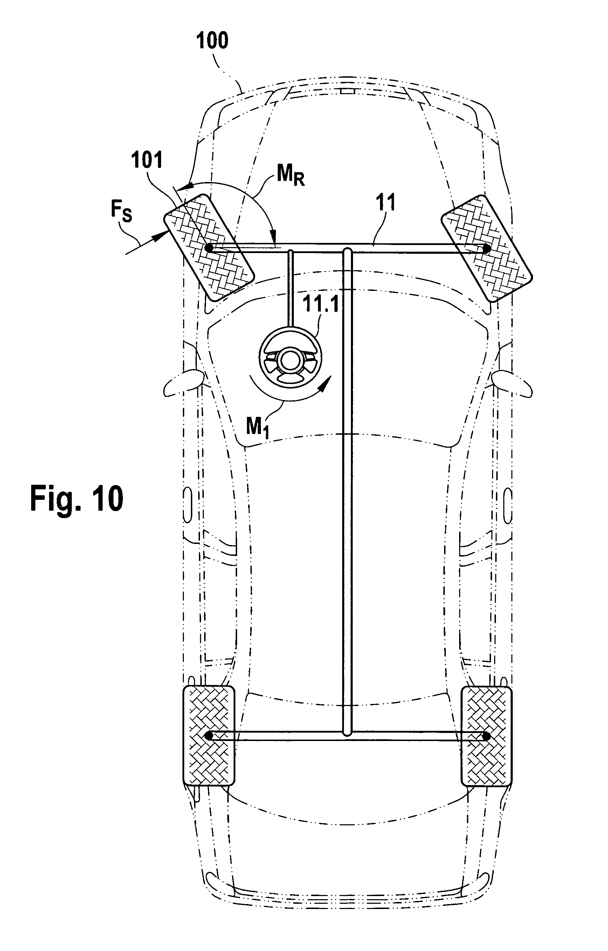

Figur 10 zeigt eine schematische Darstellung des Fahrzeugs 100 mit Fad 101, Lenksystem 11 und Lenkrad 11.1 zur Verdeutlichung des von der LKS Funktion des Fahrerassistenzsystems 1 aufgebrachten Führungsmoments $M_1$ und des sich aus der Vorderachsgeometrie ergebenden Rückstellmoments M. Damit die Räder des Fahrzeugs für eine Kurvenfahrt eingelenkt bleiben, muss $M_R = M_1$ gelten.

**Patentansprüche**

1. Verfahren für die Steuerung eines Fahrerassistenzsystems (1) mit einer LKS Funktion zur Querführung eines Fahrzeugs (100), bei dem die Funktion innerhalb von vorgebbaren Grenzwerten aktiviert und außerhalb dieser Systemgrenzen deaktiviert wird, wobei bei Deaktivierung der Funktion während einer Kurvenfahrt des Fahrzeugs (100) die Funktion von einer Regelung in eine Steuerung überführt wird, derart, dass der Fahrer während der Kurvenfahrt zumindest über eine Wegstrecke ($S_{Hold}$) weiterhin durch ein Systemmoment in der Querführung des Fahrzeugs (100) unterstützt wird, **dadurch gekennzeichnet, dass** bei Deaktivierung einer LKS-Funktion das von der LKS-Funktion auf die Lenkung des Fahrzeugs (100) ausgeübte Führungsmoment entlang einer ersten Wegstrecke ($S_{Red}$) auf einen vorgebbaren Wert ($M_{rückstell}$) gesteuert wird, dass dieser Wert ($M_{rückstell}$) entlang einer zweiten Wegstrecke ($S_{hold}$) im Wesentlichen konstant gehalten und entlang einer dritten Wegstrecke ($S_{zero}$) auf Null zurückgeführt wird.

2. Verfahren nach Anspruch 1, **dadurch gekennzeichnet, dass** das Führungsmoment ($M_{rückstell}$) derart vorgegeben wird, dass das Lenkrad des Fahrzeugs (100) in der zum Befahren der Solltrajektorie erforderlichen Position gehalten wird.

3. Verfahren nach einem der vorhergehenden Ansprüche, **dadurch gekennzeichnet, dass** ein Schwellwert für die Krümmung der Solltrajektorie vorgegeben wird, dass während der Fahrt des Fahrzeugs (100) die Krümmung der Solltrajektorie erfasst wird, und dass eine Kurvenfahrt dann unterstellt wird, wenn die während der Fahrt erfasste Krümmung der Solltrajektorie den vorgegebenen Schwellwert betragsmäßig überschreitet.

4. Verfahren nach einem der vorhergehenden Ansprüche, **dadurch gekennzeichnet, dass** die Rückführung des Führungsmoments auf einen gesteuerten Wert bzw. auf den Wert Null nach einer linearen Funktion erfolgt.

5. Verfahren nach einem der vorhergehenden Ansprüche, **dadurch gekennzeichnet, dass** die Rückführung des Führungsmoments auf einen gesteuerten Wert bzw. auf den Wert Null nach einer Funktion höherer Ordnung erfolgt.

6. Verfahren nach einem der vorhergehenden Ansprüche, **dadurch gekennzeichnet, dass** die Länge der Wegstrecken ($S_{Red}$, $S_{hold}$, $S_{zero}$) von der Verkehrssituation (VS1, VS2, VS3, VS4, VS5, VS6) abhängig ist.

7. Verfahren nach einem der vorhergehenden Ansprüche, **dadurch gekennzeichnet, dass** die Länge der Wegstrecken ($S_{Red}$, $S_{hold}$, $S_{zero}$) von der Reaktion des Fahrers abhängig ist.

8. Verfahren nach einem der vorhergehenden Ansprüche, **dadurch gekennzeichnet, dass** aus Lenkeingriffen des Fahrers ein Fahreraktivitätsmaß abgeleitet wird, und dass, in Abhängigkeit von dem abgeleiteten Fahreraktivitätsmaß, die Länge der Wegstrecken ($S_{Red}$, $S_{hold}$, $S_{zero}$) adaptiert wird.

9. Verfahren nach einem der vorhergehenden Ansprüche, **dadurch gekennzeichnet, dass** die Länge der Wegstrecken ($S_{Red}$, $S_{hold}$, $S_{zero}$) in Abhängigkeit von Signalen eines Videosensors festgelegt wird.

10. Verfahren nach einem der vorhergehenden Ansprüche, **dadurch gekennzeichnet, dass** die Verkehrssituationen (VS1, VS2, VS3, VS4, VS5, VS6) klassifiziert werden, und dass die Regelung bzw. Steuerung des Lenkradmoments in Abhängigkeit von der jeweils vorliegenden Klassifikation der Verkehrssituation erfolgt.

11. Verfahren nach einem der vorhergehenden Ansprüche, **dadurch gekennzeichnet, dass** die Klassifikation der jeweiligen Verkehrssituation (VS1, VS2, VS3, VS4, VS5, VS6) mittels zusätzlicher Sensoren, insbesondere mittels eines Radarsensors, erfasst wird.

12. Verfahren nach einem der vorhergehenden Ansprüche, **dadurch gekennzeichnet, dass** eine sofortige Deaktivierung der LKS-Funktion mit einer graduellen Reduktion des Führungsmoments auf den Wert Null durchgeführt wird, wenn der Fahrer nach Kurvenaußen lenkt.

13. Verfahren nach einem der vorhergehenden Ansprüche, **dadurch gekennzeichnet, dass** eine sofortige Deaktivierung der LKS-Funktion mit einer graduellen Reduktion des Führungsmoments auf den Wert Null durchgeführt wird, wenn der Schwellwert für die Krümmung der Solltrajektorie, der für eine Kurvenfahrt unterstellt wird, unterschritten wird.

14. Vorrichtung für die Steuerung eines Fahrerassistenzsystems (1) mit eine LKS-Funktion zur Querführung des Fahrzeugs (100), welche innerhalb von vorgebbaren Grenzwerten aktiviert und außerhalb dieser Systemgrenzen deaktiviert wird, wobei die Vorrichtung derart ausgestaltet ist, dass bei Deaktivierung der Funktion während einer Kurvenfahrt des Fahrzeugs (100) die Funktion von einer Regelung in eine Steuerung überführt wird, derart, dass der Fahrer während der Kurvenfahrt zumindest über eine Wegstrecke ($S_{Hold}$) weiterhin durch ein Systemmoment in der Querführung des Fahrzeugs (100) unterstützt wird, **dadurch gekennzeichnet, dass** bei Deaktivierung einer LKS-Funktion das von der LKS-Funktion auf die Lenkung des Fahrzeugs (100) ausgeübte Führungsmoment entlang einer ersten Wegstrecke ($S_{Red}$) auf einen vorgebbaren Wert ($M_{rückstell}$) gesteuert wird, dass dieser Wert ($M_{rückstell}$) entlang einer zweiten Wegstrecke ($S_{hold}$) im Wesentlichen konstant gehalten und entlang einer dritten Wegstrecke ($S_{zero}$) auf Null zurückgeführt wird.

**Claims**

1. Method for controlling a driver assistance system (1) having an LKS (lane keeping support) function for laterally guiding a vehicle (100), in which the function is activated within predefinable limiting values and deactivated outside these system limits, wherein when the function is deactivated during cornering of the vehicle (100) the function is changed from a closed-loop control into an open-loop control in such a way that during the cornering the driver continues to be assisted in laterally guiding the vehicle (100) by a system torque at least over a distance ($S_{hold}$), **characterized in that** when an LKS function is deactivated, the guiding torque which is applied to the steering system of the vehicle (100) by the LKS function along a first distance ($S_{red}$) is adjusted to a predefinable value ($M_{reset}$), **in that** this value ($M_{reset}$) is kept essentially constant along a second distance ($S_{hold}$), and is returned to zero along a third distance ($S_{zero}$).

2. Method according to Claim 1, **characterized in that** the guiding torque ($M_{reset}$) is predefined in such a way that the steering wheel of the vehicle (100) is held in the position necessary to travel along the setpoint trajectory.

3. Method according to one of the preceding claims, **characterized in that** a threshold value is predefined for the curvature of the setpoint trajectory, **in that** during the travel of the vehicle (100) the curvature of the setpoint trajectory is sensed, and **in that** cornering is assumed if the curvature of the setpoint trajectory which is sensed during the travel exceeds in absolute the predefined threshold value.

4. Method according to one of the preceding claims, **characterized in that** the return of the guiding torque to a controlled value or to the value of zero occurs according to a linear function.

5. Method according to one of the preceding claims, **characterized in that** the return of the guiding torque to a controlled value or to the value of zero occurs according to a higher order function.

6. Method according to one of the preceding claims, **characterized in that** the length of the distances ($S_{red}$, $S_{hold}$, $S_{zero}$) is dependent on the traffic situation (VS1, VS2, VS3, VS4, VS5, VS6).

7. Method according to one of the preceding claims, **characterized in that** the length of the distances ($S_{red}$, $S_{hold}$, $S_{zero}$) is dependent on the reaction of the driver.

8. Method according to one of the preceding claims, **characterized in that** a driver activity measure is derived from steering interventions by the driver, and **in that** the length of the distances ($S_{red}$, $S_{hold}$, $S_{zero}$) is adapted as a function of the derived driver activity measure.

9. Method according to one of the preceding claims, **characterized in that** the length of the distances ($S_{red}$, $S_{hold}$, $S_{zero}$) is defined as a function of signals of a video sensor.

10. Method according to one of the preceding claims, **characterized in that** the traffic situations (VS1, VS2, VS3, VS4, VS5, VS6) are classified, and **in that** the closed-loop and/or open-loop control in the steering wheel torque are/is carried out as a function of the respectively present classification of the traffic situation.

11. Method according to one of the preceding claims, **characterized in that** the classification of the respective traffic situation (VS1, VS2, VS3, VS4, VS5, VS6) is acquired by means of additional sensors, in particular by means of a radar sensor.

12. Method according to one of the preceding claims, **characterized in that** immediate deactivation of the LKS function is carried out with a gradual reduction in the guiding torque to the value of zero when the driver steers towards the outside of a bend.

**13.** Method according to one of the preceding claims, **characterized in that** immediate deactivation of the LKS function is carried out with a gradual reduction in the guiding torque to the value of zero when the threshold value of the curvature of the setpoint trajectory which is assumed for cornering is undershot.

**14.** Device for controlling a driver assistance system (1) having an LKS (lane keeping support) function for laterally guiding the vehicle (100), said function being activated within predefinable limiting values and deactivated outside these system limits, wherein the device is configured in such a way that when the function is deactivated during cornering of the vehicle (100) the function is changed from a closed-loop control into an open-loop control in such a way that during the cornering the driver continues to be assisted in laterally guiding the vehicle (100) by a system torque at least over a distance ($S_{hold}$), **characterized in that** when an LKS function is deactivated, the guiding torque which is applied to the steering system of the vehicle (100) by the LKS function along a first distance ($S_{red}$) is adjusted to a predefinable value ($M_{reset}$), **in that** this value ($M_{reset}$) is kept essentially constant along a second distance ($S_{hold}$), and is returned to zero along a third distance ($S_{zero}$).

**Revendications**

**1.** Procédé pour la commande d'un système d'assistance à la conduite (1), comprenant une fonction de direction assistée pour le guidage transversal d'un véhicule (100), dans lequel la fonction est activée à l'intérieur de valeurs limites prédéfinissables et est désactivée en dehors de ces limites de système, lors de la désactivation de la fonction pendant une conduite en virage du véhicule (100), la fonction étant transférée d'une régulation en une commande, de telle sorte que le conducteur, pendant la conduite en virage, continue d'être assisté au moins sur une distance ($S_{Hold}$) par un couple du système pour le guidage transversal du véhicule (100), **caractérisé en ce que** lors de la désactivation d'une fonction de direction assistée, le couple de guidage exercé par la fonction de direction assistée sur la direction du véhicule (100) est commandé le long d'une première distance ($S_{Red}$) à une valeur prédéfinissable ($M_{Rückstell}$), **en ce que** cette valeur ($M_{Rückstell}$) est maintenue essentiellement constante le long d'une deuxième distance ($S_{hold}$) et est ramenée à zéro le long d'une troisième distance ($S_{zero}$).

**2.** Procédé selon la revendication 1, **caractérisé en ce que** le couple de guidage ($M_{Rückstell}$) est prédéfini de telle sorte que le volant de direction du véhicule (100) soit maintenu dans la position nécessaire pour rouler sur la trajectoire de consigne.

**3.** Procédé selon l'une quelconque des revendications précédentes, **caractérisé en ce qu'**une valeur seuil pour la courbure de la trajectoire de consigne est prédéfinie, **en ce que** pendant la conduite du véhicule (100), la courbure de la trajectoire de consigne est détectée, et **en ce qu'**une conduite en virage est alors suggérée lorsque la courbure de la trajectoire de consigne détectée pendant la conduite dépasse largement la valeur seuil prédéfinie.

**4.** Procédé selon l'une quelconque des revendications précédentes, **caractérisé en ce que** le retour du couple de guidage à une valeur commandée ou à la valeur nulle a lieu selon une fonction linéaire.

**5.** Procédé selon l'une quelconque des revendications précédentes, **caractérisé en ce que** le retour du couple de guidage à une valeur commandée ou à la valeur nulle a lieu selon une fonction d'ordre plus élevé.

**6.** Procédé selon l'une quelconque des revendications précédentes, **caractérisé en ce que** la longueur des distances ($S_{Red}$, $S_{hold}$, $S_{zero}$) dépend de la situation du trafic (VS1, VS2, VS3, VS4, VS5, VS6).

**7.** Procédé selon l'une quelconque des revendications précédentes, **caractérisé en ce que** la longueur des distances ($S_{Red}$, $S_{hold}$, $S_{zero}$) dépend de la réaction du conducteur.

**8.** Procédé selon l'une quelconque des revendications précédentes, **caractérisé en ce que** l'on déduit des interventions de direction du conducteur une mesure d'activité du conducteur, et **en ce qu'**en fonction de la mesure d'activité du conducteur déduite, la longueur des distances ($S_{Red}$, $S_{hold}$, $S_{zero}$) est adaptée.

**9.** Procédé selon l'une quelconque des revendications précédentes, **caractérisé en ce que** la longueur des distances ($S_{Red}$, $S_{hold}$, $S_{zero}$) est déterminée en fonction de signaux d'un capteur vidéo.

**10.** Procédé selon l'une quelconque des revendications précédentes, **caractérisé en ce que** les situations du trafic (VS1, VS2, VS3, VS4, VS5, VS6) sont classifiées, et **en ce que** la régulation ou la commande du couple du volant de direction a lieu en fonction de la classification respectivement actuelle de la situation du trafic.

**11.** Procédé selon l'une quelconque des revendications précédentes, **caractérisé en ce que** la classification du trafic (VS1, VS2, VS3, VS4, VS5, VS6) dans chaque cas est détectée au moyen de capteurs supplémentaires, en particulier au moyen d'un capteur radar.

**12.** Procédé selon l'une quelconque des revendications précédentes, **caractérisé en ce qu'**une désactivation immédiate de la fonction de direction assistée est effectuée avec une réduction graduelle du couple de guidage jusqu'à la valeur nulle, quand le conducteur conduit vers l'extérieur du virage.

**13.** Procédé selon l'une quelconque des revendications précédentes, **caractérisé en ce qu'**une désactivation immédiate de la fonction de direction assistée est effectuée avec une réduction graduelle du couple de guidage jusqu'à la valeur nulle lorsque la valeur seuil pour la courbure de la trajectoire de consigne, qui est suggérée pour une conduite en virage, n'est pas atteinte.

**14.** Dispositif pour la commande d'un système d'assistance à la conduite (1), comprenant une fonction de direction assistée pour le guidage transversal du véhicule (100), lequel est activé à l'intérieur de valeurs limites prédéfinissables et est désactivé en dehors de ces limites de système, le dispositif étant configuré de telle sorte que lors de la désactivation de la fonction pendant une conduite en virage du véhicule (100), la fonction soit transférée d'une régulation en une commande, de telle sorte que le conducteur, pendant la conduite en virage, continue d'être assisté au moins sur une distance ($S_{Hold}$) par un couple du système pour le guidage transversal du véhicule (100), **caractérisé en ce que** lors de la désactivation d'une fonction de direction assistée, le couple de guidage exercé par la fonction de direction assistée sur la direction du véhicule (100) est commandé le long d'une première distance ($S_{Red}$) à une valeur prédéfinissable ($M_{Rückstell}$), **en ce que** cette valeur ($M_{Rückstell}$) est maintenue essentiellement constante le long d'une deuxième distance ($S_{hold}$) et est ramenée à zéro le long d'une troisième distance ($S_{zero}$).

Fig. 1

EP 2 152 565 B1

**Fig. 2**

21

100

20

VS1

**Fig. 3**

20

21

100

VS2

**Fig. 4**

VS3

100

21

20

Fig. 5

21

VS4

100

20

Fig. 6

21

VS5

100

20

Fig. 7

20

21

100

VS6

**Fig. 8**

**Fig. 9**

Fig. 10

**EP 2 152 565 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10311518 A1
- DE 10137292 A1

- DE 19948913 A1